(19) **Europäisches Patentamt**

**European Patent Office**

**Office européen des brevets**

(11) **EP 1 166 841 A2**

(12) **EUROPEAN PATENT APPLICATION**

(43) Date of publication:
**02.01.2002 Bulletin 2002/01**

(51) Int Cl.⁷: **B01D 19/00**

(21) Application number: **01305545.4**

(22) Date of filing: **26.06.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **30.06.2000 GB 0016179**

(71) Applicant: **Lucas Industries Limited West Midlands B90 4LA (GB)**

(72) Inventors:
 • **Hearn, Stephen Mark**
  **Cheshunt, Hertfordshire EN7 6NR (GB)**
 • **Howard, Rodney Stuart**
  **Hemel Hempstead, Hertfordshire HP1 1SP (GB)**

(74) Representative: **Beck, Simon Antony et al**
  **Withers & Rogers, Goldings House, 2 Hays Lane**
  **London SE1 2HW (GB)**

(54) **Deaerator**

(57)     A deaerator 300 is provided in which the oil to be deaerated is supplied to first and second chambers 302 and 304, respectively, arranged in a side by side manner. The oil is introduced tangentially so that a rotary motion is introduced therein. The rotary motion is introduced therein. The rotary motion causes the oil and air entrained therein to separate out due to centrifugal/centripetal forces. Air is removed via a centrally disposed tube 324, 326.

Fig.5.

## Description

The present invention relates to a deaerator and to a lubrication system including such a deaerator.

Oil may be used within a single machine for many purposes. In the context of a constant speed generator within the avionics environment, the oil may be used to lubricate bearings and other rotating parts, to act as a coolant within the generator, and may also act as a control fluid within a speed conversion system used to ensure that a variable input speed is converted to a near constant generator speed. In general, it is desirable that the oil contains little entrained air since air bubbles are compressible where as oil is not. This becomes particularly important when oil is being used as a pressurised control fluid since the presence of air bubbles within an actuator system can seriously degrade the system's control performance.

Deaerators are known in the prior art. US5085677 discloses a deaeration device in which a single cylindrical chamber is arranged vertically and has a tangential inlet duct in its lower portion for the introduction of pressurised oil and tangential outlet ducts in its upper portion for the removal of deaerated oil. An axially disposed dipper tube is provided in the upper portion of the chamber for the discharge of air from the chamber.

According to a first aspect of the present invention, there is provided a deaerator comprising first and second deaeration chambers, each chamber exhibiting substantially rotational symmetry about a respective axis, the chambers deriving a supply of pressurised fluid for deaeration from a shared inlet, and each being arranged such that a portion of the supply of pressurised fluid is introduced tangentially into the chamber.

It is thus possible to provide a multi-chamber deaeration device. Splitting the deaeration task into a plurality of smaller deaeration chambers enables deaeration performance to be improved compared with the use of a single chamber deaeration device.

Preferably the chambers are substantially cylindrical. This makes for a simple manufacturing process. However, the chambers may depart from a strict cylindrical shape if this is deemed desirable and space permits. Thus, for example, the radius of the chamber may increase in the vicinity of an outlet region in order to slow the oil down prior to discharge. Similarly, the internal profile of the deaerator may be varied around the vicinity of the inlet aperture if it is desired to cause the surface of the oil during deaeration to vary from the paraboloid of revolution which it would assume during deaeration in a cylindrical deaerator.

Preferably the first and second deaeration chambers are formed in a single housing. The chambers may be arranged in a side by side configuration with an inlet duct located in the region of the junction between the chambers. The inlet duct may contain a separation device, such as a knife edge, in order that the fluid flow from the inlet is directed into the first and second chambers. In such an arrangement, the oil in the chambers forms contra-rotating vortices. The contra rotating flows gives the designer freedom of choice to combine the flows such that the oil momentum combines or subtracts if desired, at the outlet of the deaerator.

Preferably the outlet region of each deaerator chamber has a cutaway portion. Preferably the cutaway portions facing in separate directions.

Further chambers may be added within a single unit. Thus three or four chambers may be formed together in a group and a common fluid feed line may be tapped off to each of the chambers in order to admit pressurised fluid into the chamber in a tangential direction near the wall and the base of each chamber.

According to a second aspect of the present invention, there is provided a deaeration system comprising a plurality of separation chambers arranged in parallel to receive a source of pressurised fluid for deaeration, wherein a portion of the flow from the source is introduced substantially tangentially into each separation chamber and each chamber has a centrally located air removal path.

The applicant has realised that the provision of a plurality of smaller deaeration chambers enables the deaeration system to be distributed within the free space within a machine containing or requiring deaerated oil. The use of a plurality of chambers also means that each chamber may be made smaller since the throughput of oil in each chamber, compared to a larger chamber is reduced. The reduction in radius of a chamber means that the centrifugal force acting on the oil within the chamber is increased. However in order to realise the true advantage of such a system the flow rate through each chamber should be reduced otherwise the increase in centrifugal force which enhances separation could be defeated by the reduced time that the oil would spend in the chamber during the separation process. Analysis of the fluid dynamics within a deaerator suggests that the diameter of the deaeration chamber should be proportional to the square root of the flow rate. Thus, if two deaerators (or more) are used instead of a single one, each is sized in proportion to the volume of flow that it has to handle. Thus, by using a number of smaller deaerators instead of one large one, the total circumferential distance of the plurality of smaller deaerators is larger then the circumference of the single large deaerator. This increased circumference gives rise to enhanced deaeration performance.

The present invention will further be described, by way of example, with reference to the accompanying drawings, in which:

Figure 1 is a schematic cross-section through a constant speed generator for use in an avionics environment;

Figure 2 is schematic diagram of the oil system of the generator shown in Figure 1;

Figure 3 is a representation of a twin chamber deaerator, constituting an embodiment of the present invention;

Figure 4 schematically illustrates the position of the deaeration chamber of Figure 3 within an oil reservoir; and

Figure 5 is a representation of a modified twin chamber deaerator; and

Figure 6 shows the modified deaerator in position in a oil reservoir.

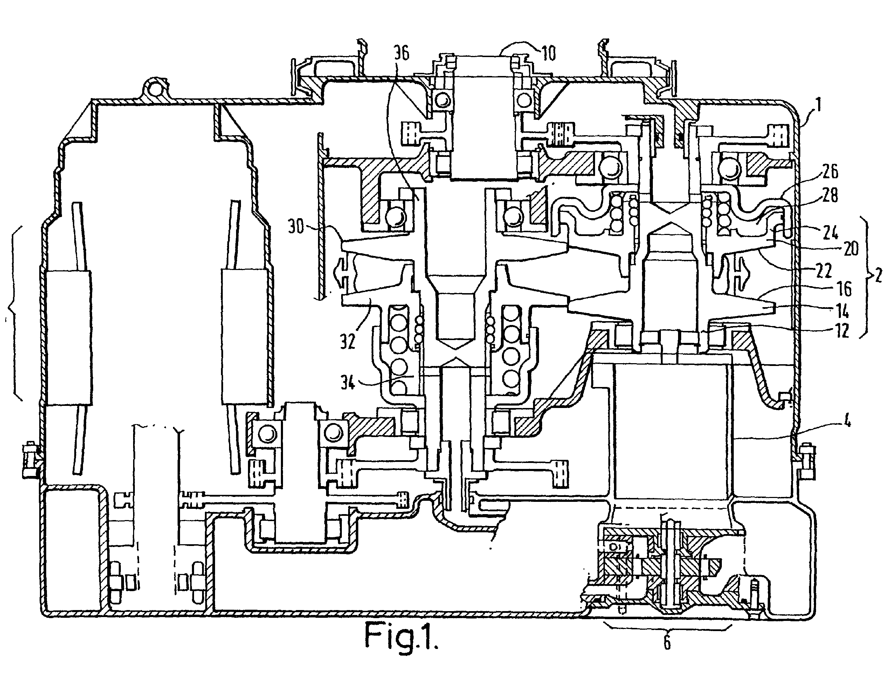

The generator shown in Figure 1 comprises a housing 1 which encloses a continuously variable transmission utilising a belt drive, generally designated 2, a low pressure pump 4, a high pressure pump 6, a generator, generally designated 8, and an oil system disposed throughout the housing 1.

The belt drive 2 enables the variable speed of an input shaft 10 which receives a drive from a spool of a gas turbine engine to be converted to a near constant speed such that the generator 8 can be run at a near constant speed. In order to do this, a first shaft 12 of the belt drive mechanism carries a flange 14 which defines an inclined surface 16 against which a drive belt bears. The shaft 12 also carries a coaxially disposed movable flange 20 drivingly connected to the shaft 12 via a splined portion (not shown). The movable flange 20 defines a further inclined surface 22 facing towards the surface 16, which surfaces serve to define a V-shaped channel whose width can be varied by changing the axial position of the flange 20 with respect to the fixed flange 14. The flange 20 has a circularly symmetric wall 24 extending towards and co-operating with a generally cup shaped element 26 carried on the shaft 12 to define a first hydraulic chamber 28 therebetween which is in fluid flow communication via a control duct (not shown) with an associated control valve. Similarly, a fixed flange 30 and a movable flange 32 are associated with a second shaft 36 and serve to define a second hydraulic control chamber 34. A steel segmented belt having a cross-section in the form of a trapezium, with the outer most surface being wider than the inner most surface is used to interconnect the first and second variable ratio pulleys formed between the pairs of fixed and movable flanges, respectively, in order to drivingly connect the flanges.

The position of each movable flange with respect to the associated fixed flange is controlled by the hydraulic actuators. Since the interconnecting belt is of a fixed width, moving the flanges closer together forces the belt to take a path of increased radial distance. The interconnecting belt has a fixed length, and consequently as one movable flange is moved towards its associated fixed flange, the other movable flange must move away from its associated fixed flange in order to ensure that the path from an arbitrary starting point, around one of the pulleys, to the second pulley, around the second pulley and back to the fixed arbitrary starting point remains a constant distance.

It is important in such a pulley system that the position of the flanges can be well controlled. It is also important that the compressive force exerted upon the belt can be well controlled since belt wear increases rapidly with compressive force but belt slippage is damaging to both the belt and the pulleys. Thus a controller or control system (not shown) is provided which controls both the drive ratio and the compressive load exerted on the belt. It is important that the controller can rapidly change the hydraulic pressures and fluid volumes within the hydraulic chambers 28 and 34, and this requires that the hydraulic fluid must have very little or no air entrained therein. This is because air bubbles are by their very nature compressible and the air bubbles will compress when an increase in hydraulic pressure is made in preference to movement of the actuating surfaces. The hydraulic system may require hydraulic pressures in the region of 100 bar. This requires the use of a high pressure pump in order to achieve this hydraulic pressure. The action of pumping fluid to this pressure warms the fluid, and as a result it is not possible, within the limited space available within an aircraft for these components, to utilise a dedicated supply of control fluid since only a small volume of fluid could be provided and this would suffer unacceptable heat rejection problems. Therefore, in order that the heating of the control fluid does not become a problem, the lubricating oil within the generator is also used as the control fluid for the continuously variable transmission. This solves the heat rejection problem, but does require the oil to be highly deaerated prior to its use within the belt control system. However, the oil is also sprayed onto bearings and gears in order to lubricate them and is also used within the rapidly rotating generator 8 as a cooling fluid. These uses allow air to be easily entrained within the oil.

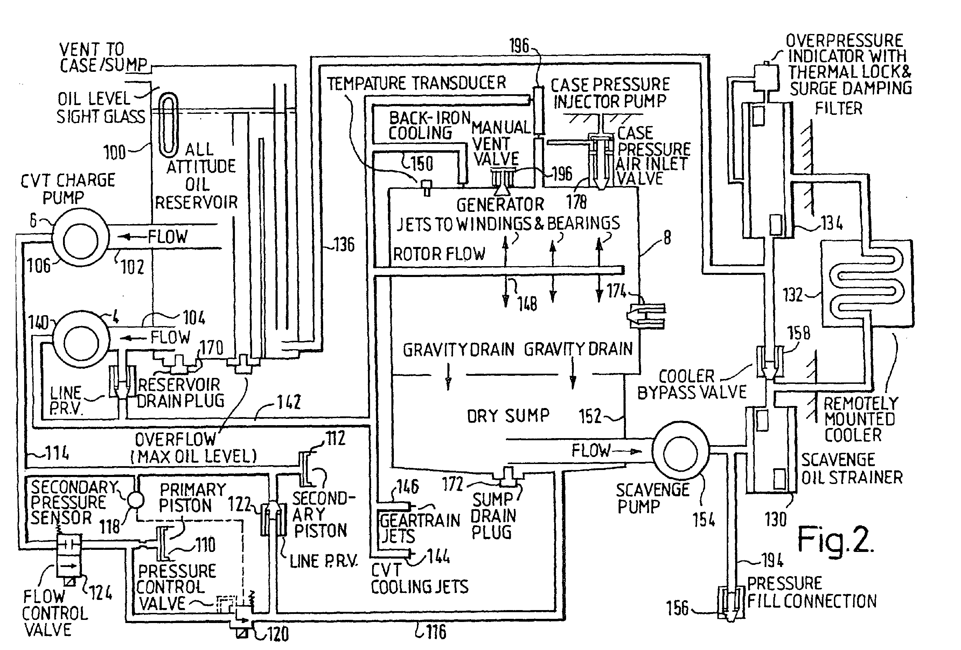

Figure 2 schematically illustrates the oil system within the power generation system. An oil reservoir 100 acts to contain de-aerated oil. The reservoir has a first outlet 102 connected to an inlet of the high pressure pump 6 and a second outlet 104 connected to an inlet of the low pressure pump 4. An outlet 106 of the high pressure pump 6 provides oil which is ducted towards a primary piston 110 formed by movable flange 20 and the cup shaped element 26 (Figure 1) thereby defining the first hydraulic control chamber 28, and a secondary piston 112 (similar to the primary piston) which contains the second hydraulic control chamber 34. As shown in Figure 2, both the primary piston 110 and the secondary piston 112 can be regarded as being connected between a high pressure supply line 114 and a low pressure return line 116. The pressure in the high pressure line 114 is measured by a pressure sensor 118 and supplied to a controller (not shown). The controller uses a measurement of oil pressure, aero-engine drive speed and/or generator speed and electrical demand to schedule and/or control the hydraulic pressure acting in the primary and secondary pistons. The secondary piston 112 is connected directly to the high pressure line 114. However, the pressure within the high pressure line 114 can be controlled by spilling pressurised lubricant from the high pressure line 114 to the low pressure return line 116 via an electrically controlled pressure control valve 120 connected between the high pressure and low pressure lines, respectively. Thus in order to increase the hydraulic pressure within the secondary piston 112, the pressure control valve 120 is moved to restrict flow therethrough, and in order to release pressure within the secondary piston, the pressure control valve 120 is opened. A normally closed pressure return valve 122 is connected between the fluid port to the secondary piston 112 and the low pressure return line 116. The valve 122 is normally closed, but is set to open at a predetermined pressure in order to protect the hydraulic system in the event of system over pressure.

The primary piston 110 receives high pressure fluid from the high pressure line 114 via an electrically operated flow control valve 124. The valve 124 is in series with the pressure control valve 120 between the high pressure line 114 and the low pressure line 116, and the primary piston 110 is connected to the node between these valves. This configuration of valves means that the pressure control valve 120 can be used to simultaneously increase the pressure in both the primary and secondary pistons in order to prevent belt slippage, whereas the balance of flow rates through the control valve 124 and the pressure control valve 120 sets the relative positions of the primary and secondary pistons. Oil from the low pressure line 116 is returned to the sump 152.

An outlet 140 of the low pressure pump 4 supplies oil via supply line 142 to oil cooling jets 144 for spraying oil onto the moving parts of the continuously variable transmission, to jets 146 for spraying oil onto the gear train interconnecting the transmission to the generator, to jets 148 for lubricating the windings and bearings within the generator and also along a cooling path 150 for cooling the stator within the generator.

The generator 8 has a gravity drain to a dry sump 152. Oil collecting in the sump 152 is pumped out of the sump by a single scavenge pump 154. The output line from the scavenge pump connects with the low pressure return line 136 via an oil strainer 130, a remotely mounted oil cooler 132 and an oil filter 134. A pressure fill connector 156 is in fluid flow communication with the low pressure return line 194 in order to allow the oil system to be filled. An oil cooler by-pass valve 158 is connected between the output from the strainer 130 and the line 136 in order to by-pass the oil cooler and oil filter during cold start or in the event of cooler, filter or external line blockage. The oil by-pass valve is normally closed and set to open at a predetermined over pressure.

In order to drain the system, a drain plug 170 is provided in the reservoir, similarly a drain plug 172 is provided for the sump and a pressure operated vent valve 174 is provided in the generator in order to relieve the excess pressure occurring within the generator. A manually operated vent valve 176 is provided to vent pressure from the generator. An automatic air inlet valve 178 is provided to allow air to enter the generator via an injector pump 196 to provide positive internal pressure.

In use, the oil in the return line 136 flows with a velocity of up to $6\text{ms}^{-1}$. This flow is sufficient to enable the oil to be deaerated within a vortex aerator.

Vortex deaerators work by exploiting the difference in density between the oil and an air bubble entrained therein. The oil, under pressure, is forced through a restricted aperture in order to increase its velocity. The aperture is arranged to be tangential with the cylindrical wall of the aerator in order that the oil is spun into a helical path within the aerator. Clearly, in the steady state, the rate of entry of oil into the aerator has to be matched by the rate of exit of oil from the aerator.

Assume that the oil exits the restricted aperture with a velocity V and that the aerator has a radius r.

Analysis of the predominantly circular motion of the oil within the deaerator allows us to calculate that the force acting on unit volume of oil having density p is $F_{oil}=\omega^2 r\rho_{oil}$. Similarly for a bubble of air, the force is $F_{air}=\omega^2 r\rho_{air}$.

Thus the force acting on a bubble of air to separate from the oil is $F_{sep}=\omega^2 r(\rho_{oil}-\rho_{air})$.

The angular velocity $\omega$ is related to the exit of velocity V by $\omega=\frac{V}{r}$. From this, it follows that the force acting to separate the air from the oil is proportional to the difference in density between the air and the oil and inversely proportional to the radius of the separator. Thus the separation force increases with decreasing radius. However, merely decreasing the radius alone is not enough. The reason for this is the fluid in the deaerator spins in to a parabaloid of revolution. Considering this parabaloid near the top the deaerator, the oil forms an annulus of depth D around the wall of the deaerator. To a rough approximation, this annulus has an cross-sectional area equal to $\pi rD$. This oil has a vertical motion superimposed on its rotating motion, the velocity of the vertical motion being that necessary to ensure that the flow rate from the deaerator matches the flow rate into the deaerator. From this it follows that, if the radius of the deaerator is halved, the axial velocity of oil up the wall of the deaerator is increased, approximately by a factor of 2, such that the product of separating force by separation time remains substantially invariant.

The applicant has realised that benefits can be obtained from using smaller diameter deaerators provided that this does not result in a corresponding reduction of the time upon which the deaeration force acts on the oil.

The provision of a plurality of smaller diameter deaerators each handling a proportion of the total deaeration task provides for better deaeration of the oil than in the prior art. The level of deaeration is important within the context of speed control systems using continuously variable transmission having belt drive of the type described herein before.

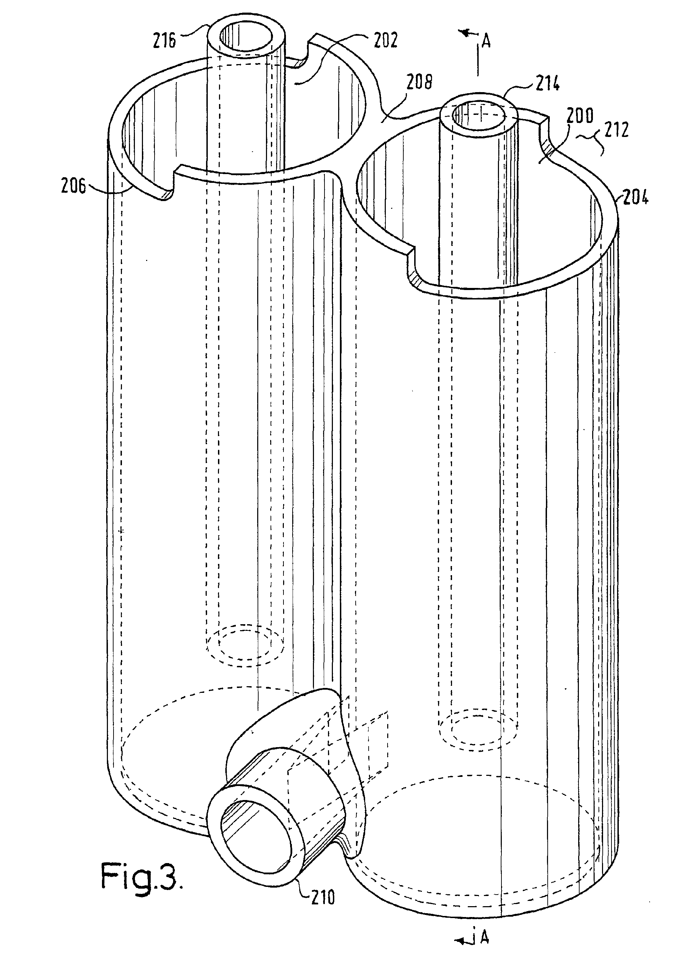

Figure 3 schematically illustrates a suitable deaerator which can be placed within the oil reservoir 100. The deaerator comprises two cylinders 200 and 202 defined by cylindrical walls 204 and 206, respectively. The walls 204 and 206 abut and merge together in a central region 208. An inlet duct 210 extends horizontally from the base of the cylinders. The inlet duct is bifurcated by a knife edge such that it divides into two fluid flow paths. Each path tapers from a cylindrical to a rectangular cross-section, with the long axis of the rectangle extending vertically. The rectangular channel shape intersects with the circular cross-section of the inner of the chambers in order to define an injection region which is tangential with the walls of the chambers. Thus fluid introduced at pressure through duct 210 is split equally into fluid flow paths and injected into the chambers 200 and 202 at increased velocity and tangentially in order to form a vortex.

The uppermost portions of each wall 204 and 206 have semicircular portions cut out from the wall to define semicircular lips of reduced height. One of the lips is indicated generally as 212. As shown in Figure 3, the lips face away from each other. These lips provide a controlled discharge route for oil at the uppermost region of the deaerators. Each deaerator also has an axially positioned dip tube 214 and 216 which extends downward into the aerator and finishes at a plane just above the uppermost portion of the tangential channel. The dip tubes 214 and 216 extend above the upper surface of the aerator, and in use pass through and extend above a baffle plate.

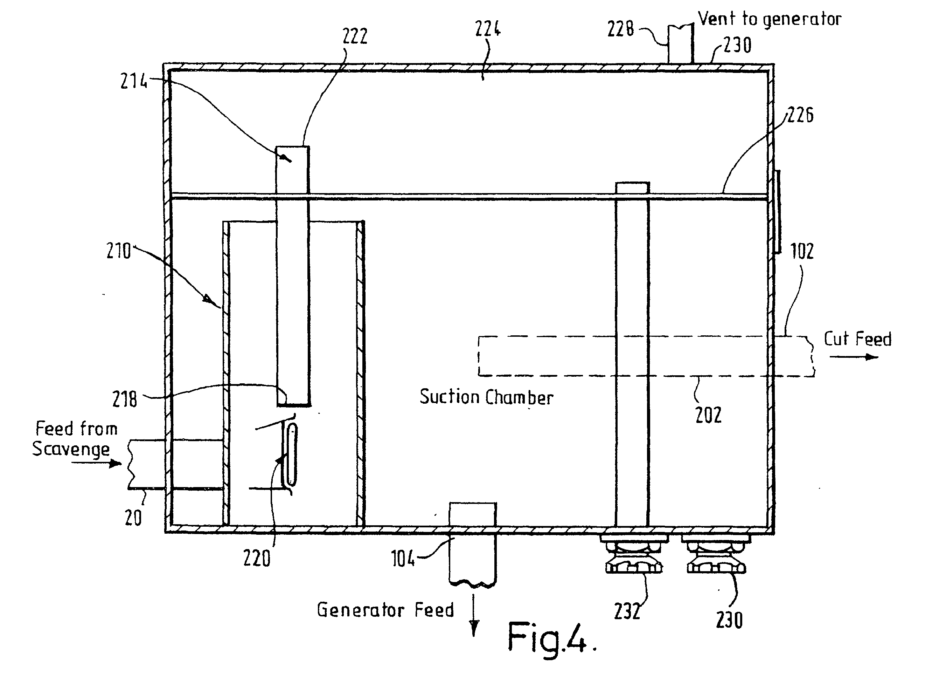

The position of the deaerator within the oil reservoir 100 is shown in greater detail in Figure 4. The deaerator 200 is shown sectioned through the line A-A' of Figure 3, and consequently the rectangular nature of the nozzle 220 is clearly shown as is the relative position of the dip tube 214, and the fact that its lower end 218 lies just above the uppermost portion of the channel 220 through which oil is introduced into the chamber. An upper end 222 of the dip tube vents into a plenum chamber 224 defined above a baffle plate 226. The plenum chamber vents to the generator via a duct 228. Once oil has escaped over the upper edge of the deaerator, it collects in the reservoir from where it can flow through the outlet 104 to the low pressure pump and via the pipe 102 to the high pressure pump. The outlet 104 is formed in the lower wall of the reservoir 100, whereas the feed for the high pressure pump is taken from the centre of the reservoir. Thus, should the reservoir become inverted during flight, the feed for the high pressure pump remains within the oil, whereas the feed for the low pressure pump rises above the oil. This is important since oil supply to the control actuators for the continuously variable drive must be maintained at all times. However, oil flow to the generator must be inhibited since otherwise the generator would start to fill with oil and windage losses would increase dramatically, possibly causing catastrophic failure of the generator. The position of the feed 104 in the lower wall of the oil reservoir ensures that oil flow to the generator is automatically cut should negative G or inversion occur.

The reservoir includes a drain 230 and an overflow 232. The overflow is significant since it enables the oil system to be filled in a single operation.

In order to fill a previously drained or unfilled lubrication system, overflow 232 is opened and then oil is injected via connector 156 of Figure 2. This causes oil to flow from the injector up one arm of the low pressure return line through the strainer 130, the oil cooler 132 the filter 134 and into the reservoir via the line 136 and the vortex deaerator.

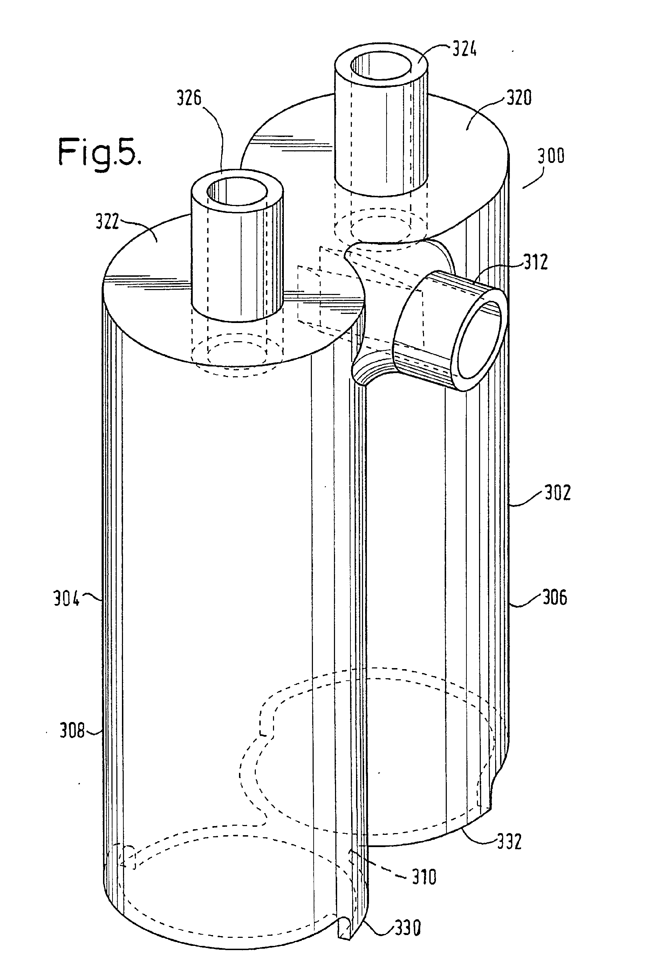

Figure 5 is a schematic representation of a modified twin vortex deaerator. In essence, the deaerator indicated generally as 300 is similar to the deaerator described with respect to Figure 3, except that it is now in an inverted configuration. Thus, the deaerator comprises two cylinders 302 and 304 defined by cylindrical walls 306 and 308, respectively. The walls 306 and 308 abut and merge together in a central region 310. An inlet duct 312 extends horizontally into an upper portion of the cylinders. The inlet duct is bifurcated by a knife edge such that it divides into two fluid flow paths. Each path tapers from a cylindrical to a rectangular cross section with the long axis of the rectangle extending vertically. The rectangular channel shape intersects with the circular cross section of the inner of the chambers in order to define an injection region which is tangential with the walls of the chambers. Thus fluid introduced at pressure through the ducts 312 is split substantially equally into two fluid flow paths and injected into the chambers 302 and 304 at increased velocity and tangentially in order to form a vortex.

The upper end of each cylinder is closed by a respective wall 320 and 322 through which an associated dip tube 324 and 326 extends.

The lowermost portion of each wall 306 and 308 have semicircular portions removed therefrom such that, when the deaerator is disposed inside a oil reservoir with end wall 330 and 332 of the cylinders contacting a wall of the oil reservoir the semicircular portions serve to define oil exit paths such that oil can escape from the deaerator.

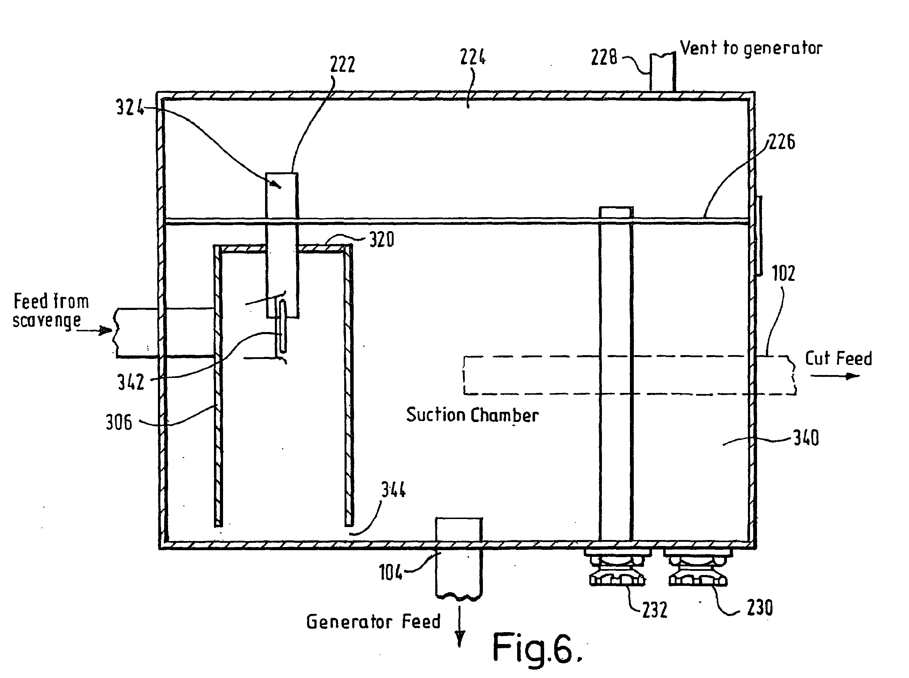

Figure 6 schematically shows the modified deaerator in position within an oil reservoir. The oil reservoir is similar to that described with respect to Figure 4, and like reference numerals are used for like parts. The main significant difference is that the dip tube 324 is comparatively shorter than the corresponding dip tube 214 shown in Figure 4. The deaerator 306 is, in use, completely submerged in lubricant within the chamber 340. Lubricant fed in from the scavenge pump is injected via a vertically disposed aperture 342 positioned towards the upper wall 320 of the deaerator. Oil exits the deaerator via an exit aperture 344.

Oil received from the scavenge pump will have been passed through an oil cooler and therefore it can be expected to be cooler than the oil already present in the oil reservoir (since heat will lead into the oil reservoir from the generator and gear box surrounding it) and consequently the oil will naturally tend to sink thereby displacing all the oil. The operation of the vortex deaerator and the oil reservoir is substantially as already hereinbefore described.

It is thus possible to provide an oil system which allows the oil to be recovered, filtered deaerated and then the deaerated oil to be stored in a reservoir prior for reuse. This allows a supply of highly deaerated oil to be available for use in both hydraulic control and lubrication applications within the constant speed generator. The provision of a multichamber deaerator enables the height of the deaerator to be reduced and deaeration performance to be enhanced.

**Claims**

1. A deaerator, **characterised by** first and second deaeration chambers (200, 202; 302, 306), each chamber exhibiting substantially rotational symmetry about a respective axis, the chambers deriving a supply of pressurised fluid for deaeration from a shared inlet (210), and each being arranged such that a portion of the supply of pressurised fluid is introduced tangentially into the chamber.

2. A deaerator as claimed in claim 1, **characterised in that** the first and second deaeration chambers are formed in a single housing.

3. A deaerator as claimed in claim 2, **characterised in that** the chambers are in a side by side configuration with an inlet duct (210) located in the region of the junction between the chambers (200, 202).

4. A deaerator as claimed in any one of the preceding claims, in which the inlet contains a separation device in order that fluid flow from the inlet (210) is directed into the first and second chambers (200, 202).

5. A deaerator as claimed in any one of the preceding claims in which an outlet of each chamber of the deaerator is formed by a cutaway portion.

6. A deaerator as claimed in any one of the preceding claims, **characterised in that** an air exit path is provided from each chamber of the deaerator, the exit path being defined by a dip tube (214, 216).

7. A deaerator as claimed in claim 6, **characterised in that**, in use and when orientated correctly, the inlet (210) is disposed above the fluid outlet of each chamber, and the dip tube of each chamber extends through an upper wall (320, 322) which closes the upper ends of the chamber (200, 202).

8. A deaerator as claimed in any of the preceding claims, **characterised by** comprising further chambers.

9. An oil reservoir including a deaerator as claimed in any one of the preceding claims, in which air removed by the deaerator is ducted to a plenum chamber (224) above a baffle plate (226).

10. A deaeration system, comprising a plurality of separation chambers (200, 202) arranged in parallel to receive pressurised fluid for deaeration, wherein a portion of the flow of pressurised fluid is introduced substantially tangentially into each separation chamber, and each chamber has a centrally located air removed path.

Fig.1.

Fig.2.

OVERPRESSURE INDICATOR WITH THERMAL LOCK & SURGE DAMPING FILTER

REMOTELY MOUNTED COOLER

SCAVENGE OIL STRAINER

134

132

158

130

194

PRESSURE FILL CONNECTION

CASE PRESSURE INJECTOR PUMP

CASE PRESSURE AIR INLET VALVE

8

174

CASE PRESSURE TRANSDUCER

196

196

GENERATOR 178

BACK-IRON COOLING

MANUAL VENT VALVE

150

JETS TO WINDINGS & BEARINGS

ROTOR FLOW

148

GRAVITY DRAIN GRAVITY DRAIN

DRY SUMP

152

FLOW

COOLER BYPASS VALVE

SCAVENGE PUMP

154

156

SUMP DRAIN PLUG

172

146

GEARTRAIN JETS

144

CVT COOLING JETS

116

TEMPATURE TRANSDUCER

136

142

112

SECONDARY PISTON

LINE P.R.V.

122

120

ALL ATTITUDE OIL RESERVOIR

FLOW

104

FLOW

170

RESERVOIR DRAIN PLUG

OVERFLOW (MAX OIL LEVEL)

PRIMARY PISTON

110

PRESSURE CONTROL VALVE

VENT TO CASE/SUMP

OIL LEVEL SIGHT GLASS

100

102

CVT CHARGE PUMP

106

140

LINE P.R.V.

114

SECONDARY PRESSURE SENSOR 118

124

FLOW CONTROL VALVE

Fig.3.

Fig.4.

Fig.5.

Fig.6.